# EUROPÄISCHE PATENTANMELDUNG

(11) **EP 2 450 465 A1**
(43) Veröffentlichungstag der Anmeldung: **09.05.2012**
(21) Anmeldenummer: 10190473.8
(22) Anmeldetag: 09.11.2010
(51) Int. Cl.: C23C 4/12

(54) **Poröses Schichtsystem mit poröserer Innenschicht**

(71) Anmelder: Siemens Aktiengesellschaft, 80333 München (DE)
(72) Erfinder: Neuenhahn, Thomas, 50733 Köln (DE); Casu, Alessandro, 47057 Duisburg (DE); Menke, Christian, 45329 Essen (DE)

(57) **Zusammenfassung**

Durch die Verwendung einer höheren Porosität im inneren Teil eines keramischen Schichtsystems kann die Lebensdauer erheblich gesteigert werden.

## Beschreibung

Die Erfindung betrifft ein Schichtsystem mit mehreren keramischen Schichten.

Keramische Wärmedämmschichten werden in der Gasturbinentechnologie häufig für thermisch stark belastete Bauteile wie z.B. Leit- und Laufschaufeln verwendet. Dies reduziert die Temperatur metallischen Substrat und erhöht somit die Lebensdauer der Komponente.

Bisher wurde als Keramik das Yttrium-stabilisierte Zirkonoxid oder Pyrochlore eingesetzt, wobei die Pyrochlore oft eine zwischenliegende Zirkonoxidschicht aufweisen.

Durch die Porosität wird die thermische Leitfähigkeit weiter reduziert, so dass im Bereich der höchsten Temperatur, also der äußerste Schichtbereich die höchste Porosität aufweist.

Es ist Aufgabe der Erfindung die Lebensdauer der keramischen Schicht oder Schichten weiterhin zu verbessern.

Die Aufgabe wird gelöst durch ein Schichtsystem gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: Stand der Technik
- Figur 2, 3: Ausführungsbeispiele der Erfindung,
- Figur 4: eine Gasturbine,
- Figur 5: eine Turbinenschaufel,
- Figur 6: eine Brennkammer,
- Figur 7: eine Liste von Superlegierungen.

Die Figuren und die Beschreibung stellen nur Ausführungsbeispiele der Erfindung dar.

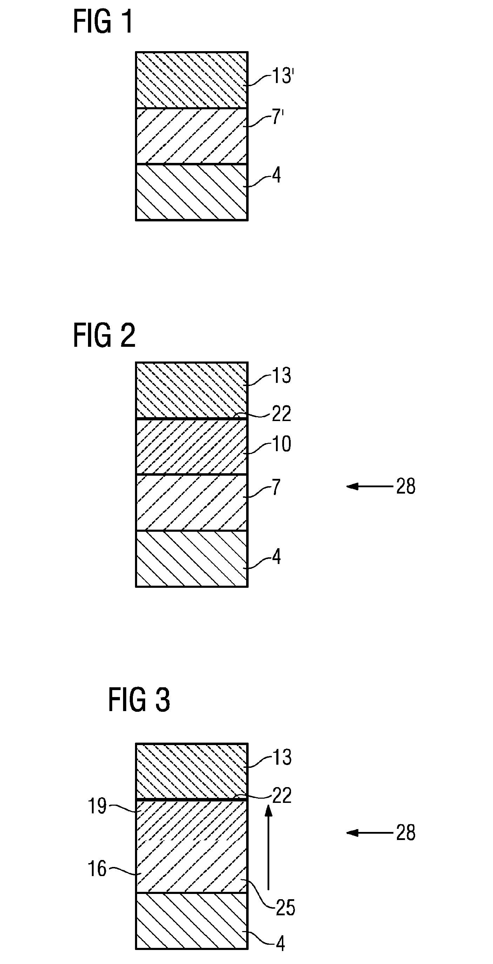

Figur 1 zeigt den Stand der Technik.

Auf einem Substrat 4 ist eine unterste liegende Zirkonoxidschicht 7' vorhanden, auf dem eine äußere Pyrochlorschicht 13' aufgebracht ist. Die Porosität der ZrO₂-Schicht ist kleiner verglichen mit der Porosität der äußeren Schicht 13'.

Figur 2 zeigt ein erstes Ausführungsbeispiel der Erfindung. Schematisch ist nur der keramische Schichtanteil eines Schichtsystems gezeigt.

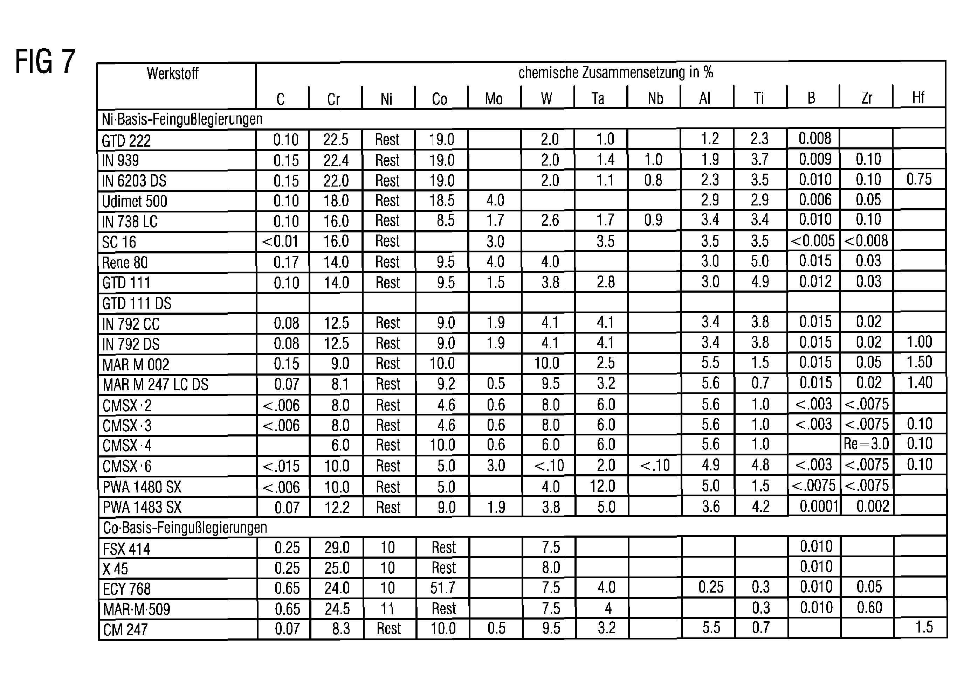

Das Schichtsystem weist ein Substrat 4 auf, das vorzugsweise eine nickelbasierten Superlegierung gemäß Figur 7 aufweist und insbesondere daraus besteht.

Das Substrat 4 kann eine Diffusionsschutzschicht oder eine Overlay-Schicht (nicht näher dargestellt in den Figuren) aus einem metallischen Material/Legierung zur Verhinderung von Korrosion und/oder zur besseren Anbindung der keramischen Schicht aufweisen.

Vorzugsweise wird hier als Anbindungsschicht zur Keramik eine MCrAl- oder MCrAlX-Legierung zur Bildung einer Overlay-Schicht verwendet (M = Nickel (Ni) oder Kobalt (Co)).

Auf dieser Overlay-Schicht bildet sich vorab oder zumindest während des Betriebes eine Oxidschicht (TGO) (nicht näher dargestellt in den Figuren).

Auf der MCrAl-Schicht oder der MCrAl (X)-Schicht oder der Anbindungsschicht ist das keramische Schichtsystem gemäß Figur 2 vorhanden.

Der unterste keramische Schichtbereich 7 ist eine vorzugsweise Yttriumoxid-teilstabilisierte Zirkonoxidschicht, vorzugsweise mit 8Gew.% Yttriumoxid.

Die unterste keramische Schicht 7 wird vorzugsweise mittels einem thermischen Plasmaspritzverfahren, insbesondere APS oder HVOF aufgetragen.

Die unterste keramische Schicht weist eine Porosität von vorzugsweise 12% +/- 4%, insbesondere +/-2% auf.

Auf dieser unten liegenden keramischen Schicht 7 wird eine weitere keramische Schicht 10 aufgetragen, die vorzugsweise dasselbe Material aufweist, wie die unten liegende keramische Schicht 7, nämlich Yttriumoxid-stabilisiertes Zirkonoxid, die jedoch eine höhere Porosität aufweist, die bei 18% +/- 4%, insbesondere +/-2% liegt.

Die äußere, insbesondere äußerste keramische Schicht 13 auf der keramischen Schicht 10 weist eine Pyrochlorstruktur, vorzugsweise aus Gadoliniumzirkonat oder Gadoliniumhafnat auf, die eine Porosität von vorzugsweise 15% +/- 4%, insbesondere +/-2% aufweist und vorzugsweise ebenfalls mittels APS oder HVOF hergestellt wird.

Figur 3 zeigt ein weiteres Ausführungsbeispiel der Erfindung. Die Schichten 7, 10 gemäß Figur 2 stellen hier eine Gradientenschicht 25 dar, wobei die Porosität von 12% +/- 4%, insbesondere +/-2% ausgehend vom Substrat 4 zu äußeren Schicht 13 bis (Grenzbereich 22) auf 18% +/- 4%, insbesondere +/-2% zunimmt.

Die größte Porosität wird zumindest in dem Grenzbereich 22 zwischen der Yttriumoxid-teilstabilisierten Zirkonoxidschicht 25 und der Pyrochlorstruktur 13 erreicht.

Die Schichten 25, 13 werden vorzugsweise ebenfalls mittels APS oder HVOF hergestellt.

Diese Vielfachschicht kann im normalen Herstellverfahren erzeugt werden, bei dem die Wärmedämmschicht in mehreren Schichten und Auftragungsvorgängen von etwa 25µm Dicke aufgetragen wird.

Dabei kann die Porosität ausgehend von der ersten Schichtlage gesteigert werden.

Durch die erhöhte Porosität erzielt man eine geringere Wärmeleitfähigkeit im Vergleich zu der Schicht mit minimaler

Porosität. Durch Gradierung, also durch die Gradientenschicht 25 oder die zwei keramischen Schichten 7,10 werden die thermischen Gradienten zwischen der MCrAl- oder MCrAlX-Legierung und der Zirkonoxidschicht als auch zwischen der Zirkonoxidschicht und der Pyrochlorstruktur reduziert. Da die thermischen Gradienten eine Ursache für das Versagen des Substrats sein kann, ist die Lebensdauer erhöht.

Unterschiede in den Porositäten (Fig. 2, 3) betragen generell vorzugsweise mindestens 10% und sind daher deutlich größer als herstellungsbedingte Porositätsunterschiede.

Bei der Beschichtung eines Bauteils 120, 130, 155 sind die Variationen der verschiedenen gewünschten Porositäten gleich, d.h. die Abstände der gewünschten Porositäten von 12%, 18% und 15% bleiben nahezu gleich und ändern sich höchstens bei einem anderem Bauteil in einer neuen Beschichtung.

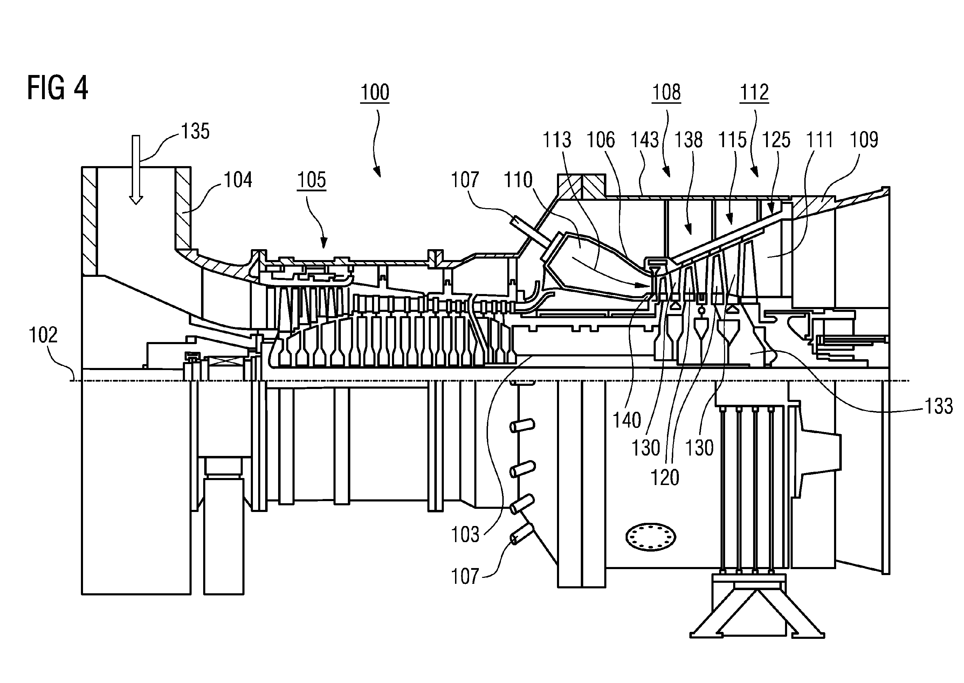

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 ist mit einem beispielsweise ringförmigen Heißgaskanal 111 verbunden. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

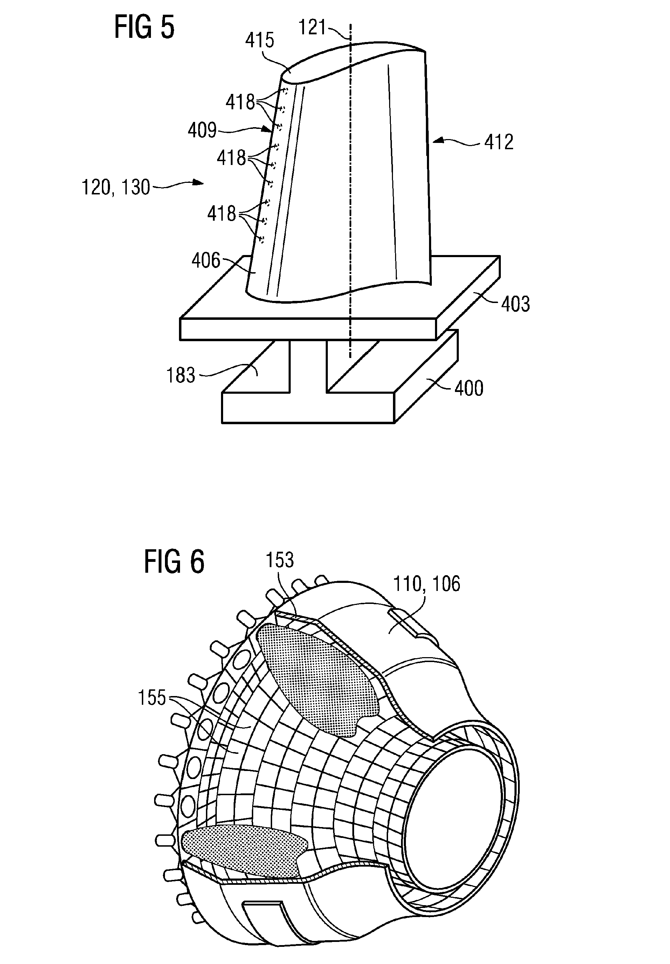

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein. Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Schichtsystem mit keramischen Schichten,
das aufweist:
ein Substrat (4)
eine Anbindungsschicht auf dem Substrat (4),
vorzugsweise eine MCrAl(X)-Schicht,
eine unterst liegende keramische Schicht (7, 16),
insbesondere eine stabilisierte Zirkonoxidschicht,
ganz insbesondere eine Yttriumoxid-stabilisierte Zirkonoxidschicht und
eine äußere Pyrochlorschicht (13),
insbesondere eine äußerste Pyrochlorschicht (13),
wobei eine mittig liegende keramische Schicht (10, 19, 25),
insbesondere eine Yttriumoxid-stabilisierte Zirkonoxidschicht (10, 19),
zumindest lagenweise,
insbesondere vollständig,
eine höhere Porosität aufweist als die äußere Pyrochlorschicht (13).

2. Schichtsystem nach Anspruch 1,
das drei keramische Schichten (7, 10, 13) aufweist,
wobei die unterste keramische Schicht (7) die geringste Porosität,
eine mittige keramische Schicht (10) die höchste Porosität und die äußere keramische Schicht (13) wiederum eine niedrigere Porosität als die mittig liegende Keramikschicht (10) aufweist,
insbesondere weist die äußere keramische Schicht (13) eine höhere Porosität auf als die unterste keramische Schicht (7).

3. Schichtsystem nach Anspruch 1,
bei dem die Porosität einer innen liegenden keramischen Schicht (25) ausgehend vom Substrat (4) hin zur Grenzschicht (22) zur äußeren Pyrochlorschicht (13) zunimmt, insbesondere kontinuierlich zunimmt.

4. Schichtsystem nach Anspruch 1, 2 oder 3,
bei dem die höchste Porosität des Schichtsystems (28) bei 18% +/- 4%, insbesondere +/-2% liegt,
die die mittig liegende keramische Schicht (10) oder
die innen liegende Schicht (19, 25) zumindest im oder unter dem Grenzbereich (22) zur äußeren Schicht (13) aufweist.

5. Schichtsystem nach Anspruch 1, 2, 3 oder 4,
bei dem die unterst liegende keramische Schicht (7, 16) eine Porosität von 12% +/- 4%, insbesondere +/-2% aufweist.

6. Schichtsystem nach Anspruch 1, 2, 3, 4 oder 5,
bei dem die äußere keramische Schicht (13) eine Porosität von 15% +/- 4%, insbesondere +/-2% aufweist.

7. Schichtsystem nach Anspruch 1, 2, 3, 4, 5 oder 6,
das zumindest zwei keramische Schichten (7, 10, 13, 16, 19) aufweist,
insbesondere nur zwei keramische Schichten (25, 13) aufweist.

8. Schichtsystem nach Anspruch 1, 2, 3, 4, 5 oder 6,
das zumindest drei Schichten (7, 10, 13) aufweist, insbesondere nur drei keramische Schichten (7, 8, 13) aufweist.

9. Schichtsystem nach Anspruch 1, 2, 3, 4, 5, 6, 7 oder 8, das besteht aus
Substrat (4),
optional metallischer Anbindungsschicht,
optional Oxidschicht auf der Anbindungsschicht,
zumindest einer (25),
insbesondere zwei (7, 10) Zirkonoxidschichten und
einer äußeren Pyrochlorschicht (13).

10. Schichtsystem nach Anspruch 9,
das nur eine Zirkonoxidschicht (25) aufweist.

11. Schichtsystem nach einem oder mehreren der vorhergehenden Ansprüche,
bei dem der Unterschied in den Porositäten zwischen der untersten Schicht (7) und mittig liegender keramischen Schicht (10, 19) und/oder
zwischen mittig liegender keramischer Schicht (10, 19) und äußerer keramischer Schicht (13) und/oder zwischen der untersten Schicht (7) und äußerer keramischen Schicht (13)
mindestens 10% beträgt.

12. Schichtsystem nach einem oder mehreren der vorhergehenden Ansprüche,
bei dem die Variation der Porositäten +/- 2% beträgt.

13. Schichtsystem nach einem oder mehreren der vorhergehenden Ansprüche,
bei dem die Pyrochlorstruktur Gadoliniumzirkonat oder Gadoliniumhafnat aufweist,
insbesondere daraus besteht.

14. Schichtsystem nach einem oder mehreren der vorhergehenden Ansprüche,
bei dem die keramischen Schichten mittels APS oder HVOF hergestellt werden und vorzugsweise nicht mittels CVD, PVD oder EB-PVD.
